# EUROPEAN PATENT SPECIFICATION

(11) **EP 0 540 973 B1**
(45) Date of publication and mention of the grant of the patent: **10.04.1996**
(21) Application number: 92118280.4
(22) Date of filing: 26.10.1992
(51) Int. Cl.: C08F 10/00, C08F 4/68

(54) **Components and catalysts for the polymerization of olefins**
Komponenten und Katalysatoren zur Polymerisation von Olefinen
Composants et catalyseur pour la polymérisation d'oléfines

(30) Priority: 04.11.1991 IT MI912913
(43) Date of publication of application: 12.05.1993
(73) Proprietor: MONTELL NORTH AMERICA INC., New Castle County Delaware (US); Montell Technology Company bv, NL-2132 MS Hoofddorp (NL)
(72) Inventor: Morini, Giampiero, Dr., I-27058 Voghera, Pavia (IT); Albizzati, Enrico, Dr., I-28041 Arona, Novara (IT); Giannini, Umberto, Dr., I-20100 Milan (IT); Nicolini, Matteo, Mr., I-28012 Cressa, Novara (IT)
(74) Representative: Zanoli, Enrico

(56) References cited:
- EP-A- 0 187 495
- US-A- 4 579 835

## Description

The present invention relates to catalyst components based on vanadium compounds for the polymerization of olefins CH₂=CHR, where R is hydrogen or an alkyl radical containing 1-8 carbon atoms, catalysts obtained therefrom and the use thereof in processes for the (co)polymerization of olefins.

It is known that the use of vanadium-based catalysts in processes for preparing polyolefins has some advantages, such as for example the advantage of obtaining a quite broad molecular weight distribution in the case of polyethylene and a good comonomer distribution in the products deriving from copolymerization processes.

From Patent Nos. EP 78996, US 4.508.842, and from Patent Application No. EP 312876 components of catalysts for the polymerization of ethylene are known, prepared by reacting adducts between a halogenated vanadium compound (generally VCl₃) and an electron-donor compound with a halogenated reducing compound. Said compound is generally an alkyl aluminum halide and in particular a monohalide derivative (for example diethyl aluminum chloride: AlEt₂Cl).

Said catalyst components form, with aluminum alkyls, catalysts for the polymerization of ethylene, where they are generally employed in the presence of a halogenated hydrocarbon acting as an activator.

The presence of the activator in the polymerization stage is indispensable for obtaining sufficiently high yields and consequently a low vanadium content in the polymer.

The presence of the halogenated hydrocarbon leads however to a high content of hydrolyzable halogenated compounds in the polymer produced, and this negatively affects product quality in addition to causing corrosive phenomena in the processing equipment.

From EP 187 495 are known catalyst components obtained supporting on silica (i) an organo aluminum compound, (ii) a halogenating agent, and (iii) a vanadium compound. Although mentioned, the use of a vanadium compound complexed with an electron donor is never exemplified. Polymerization tests reported show that also in this case the catalyst productivities are of interest only when a halogenating agent is used in the polymerization process.

The need is therefore felt for the availability of vanadium catalysts having sufficiently high activity and not requiring the use of halogenated hydrocarbons in the polymerization stage, so that the above described drawbacks and therefore the removal of catalyst residues from the polymer can be avoided.

It has surprisingly been found that, as components of catalysts for the (co)polymerization of olefins, it is possible to advantageously use halogenated vanadium compounds obtained by reacting complexes between a vanadium derivative and an electron-donor compound with an agent capable of reacting with the electron-donor compound, said reaction being conducted in the presence of a halogenated compound (halogenated hydrocarbon) and using a non-halogenated reducing compound as the agent capable of reacting with the electron-donor compound.

At the end of the reaction the halogenated compound is removed and a highly active catalyst component devoid of said residues is obtained.

The thus obtained catalyst components form, by reacting with organometallic aluminum derivatives, catalysts having high activity in the polymerization of olefins, the use of halogenated hydrocarbons as activators not being necessary; therefore they do not exhibit the described drawbacks occurring with catalysts of the art.

The catalyst components of the present invention comprise the product of the reaction between:
(a) a complex between a halogenated vanadium compound and an electron-donor compound having general formula:

   VX₃·nED

   wherein:
   - X =: halogen;
   - ED =: electron-donor compound selected in particular from the following classes of compounds: alcohols, silanols, ethers, amines, ketones, esters of carboxylic acids and phosphines; and
   0.5≦n≦6;
(b) a non-halogenated, reducing compound, capable of reacting with the electron-donor compound present in the complex; and
(c) a halogenated compound selected from saturated or unsaturated, aromatic or aliphatic, halogenated hydrocarbons, and an ester of a halogenated unsaturated aliphatic acid.

It is important that the agent capable of reacting with the electron-donor compound is a non-halogenated reducing compound; in fact, it has unexpectedly been observed that using the halogenated reducing compounds normally used in reactions with vanadium-electron-donor complexes leads, when the reaction is conducted in the presence of a halogenated hydrocarbon, to insufficiently active catalysts.

The catalyst components of the invention form, by reacting with alkyl aluminum compounds, catalysts for the (co)polymerization of olefins, in particular of ethylene and mixtures thereof with α-olefins such as propylene, 1-butene, 1-pentene, 4-methyl-1-pentene, 1-hexene and 1-octene.

Preferred Al-alkyl compounds are the trialkyl derivatives, in particular triethyl aluminum (AlEt₃), triisobutyl aluminum (AliBu₃), tributyl aluminum (AlBu₃) and tri-n-hexyl aluminum (AlnEs₃). Other useful Al-alkyl compounds are the Al-dialkyl monohydrides, the Al-dialkyl monoalkoxides and the Al-dialkyl monochlorides.

The Al/V molar ratio used in the preparation of the catalysts is greater than 1 and generally comprised between 10 and 500.

Preferably the vanadium trihalide is VCl₃.

Preferred electron-donor compounds are: aliphatic or cycloaliphatic alcohols having from 1 to 12 carbon atoms, and in particular ethyl alcohol (EtOH) and isopropyl alcohol (i-propOH); silanols having formula R₄₋ₙSi(OH)ₙ, where the radicals R, equal or different, are hydrocarbon radicals having from 1 to 12 carbon atoms and n = 1 or 2, and in particular Et₃SiOH; and alkyl or cycloalkyl ethers having from 2 to 20 carbon atoms, and in particular tetrahydrofurane (THF).

Representative complexes are: VCl₃·nEtOH, VCl₃·nTHF and VCl₃·4i-propOH, where n is comprised between 2 e 4.

Examples of non-halogenated reducing compounds capable of reacting with the electron-donor present in the complex are the aluminum derivatives of formula AlR₂Y, where Y = R, H, OR or OAlR₂, such as: AlEt₃, AliBu₃, AlBu₃, Al(OEt)Et₂, AlEt₂H, AliBu₂H, Et₂Al-O-AlEt₂ and iBu₂Al-O-AliBu₂ and particularly preferred among these are AlEt₃, AliBu₃.

Halogenated hydrocarbons representative of compound (c) are:
- saturated aliphatic halogenated hydrocarbons: CCl₄, CHCl₃, CH₂Cl₂, CFCl₃, CBr₄, CF₂ClCFCl₂, CF₂ClCCl₃;
- unsaturated aliphatic halogenated hydrocarbons: CH₂=CHCl, CH₂=CCl₂, CH₂=CHCH₂Cl, CCl₂=CClCCl₃, CH≡CCH₂Cl;
- aromatic halogenated hydrocarbons: α-chlorotoluene, α,α-dichloro-toluene, diphenylchloromethane, diphenyldichloromethane, triphenylchloromethane;
- esters of halogenated unsaturated carboxylic acids: methyl or ethyl or butyl ester of the 2,3,4,4-tetrachloro-2-butenoic acid, methylperchlorocrotonate, ethylperchlorocrotonate, butylperchlorocrotonate.

Preferred among these are the saturated aliphatic halogenated hydrocarbons and in particular CHCl₃.

In the case of complexes of VX₃ with alcohols or silanols, the final products of the reaction have formula VXₘ(OR)₃₋ₘ, where R is a hydrocarbon radical or a group -Si(R)₃ and 1,5≦m≦3.

The vanadium complexes are generally prepared by treating, under an inert atmosphere, the vanadium halide with an excess of electron-donor compound and then removing the excess of electron-donor compound to obtain the desired complex.

In the subsequent reaction with the reducing compound, the complexes can be utilized as such or in solution. The reaction of the complexes with the non-halogenated reducing compound (b), for example a compound of formula AlR₂Y with R and Y having the above described meaning, and the halogenated compound (c) can be conducted according to the following operating procedure:
i. the aluminum compound (b) together with the halogenated compound (c) are solubilized in aliphatic and/or aromatic solvents at temperature comprised between -10°C and +100°C, preferably between 0°C and +20°C and in any event at temperatures lower than the boiling point of the solvent used;
ii. the vanadium complex (a) is slowly added to the solution maintained under agitation and at temperatures comprised between -10°C and +100°C, preferably between 0°C and +20°C; the reaction is then allowed to proceed at temperatures comprised between 0°C and +100°C, preferably between +20°C and +80°C, for a period of time comprised between 10 minutes and 5 hours, preferably between 1 and 3 hours.
iii. at the end of the reaction, the solid product obtained is recovered by filtration, repeatedly washed with aliphatic and/or aromatic hydrocarbon solvents at temperatures comprised between 0°C and +100°C, preferably between +20°C and +80°C, and finally vacuum dried.

An alternate method for carrying out the activation of the catalyst component consists of adding a solution containing the aluminum compound and the halogenated compound to a suspension of the vanadium complex in aliphatic and/or aromatic hydrocarbon solvents, without significantly modifying the performance of the thus obtained activated catalyst. It is also possible to add the aluminum compound, neat or in solution, to a suspension of the vanadium complex in aliphatic and/or aromatic hydrocarbon solvents containing the halogenated compound.

The molar ratio between the aluminum compound and the electron-donor compound ED is at least 0.25 and preferably comprised between 0.5 and 3.

The molar ratio between the halogenated compound and the aluminum compound is comprised between 0.1 and 10, in particular between 0.5 and 5.

The reaction is carried out operating at molar concentration values of the aluminum compound in the solution generally comprised between 0.001 and 10 mole/l, preferably between 0.01 and 5 mole/l.

The catalyst components object of the invention can be supported according to known methods on supports such as magnesium halides in active form, silica, alumina or mixtures thereof. The best results are achieved by supporting amounts of vanadium compound, expressed as vanadium, greater than 5% by weight, in particular comprised between 5 and 10% by weight.

The thus obtained supported catalyst components form, by reacting with alkyl aluminum compounds, catalysts exhibiting high activity in the polymerization of ethylene and a-olefins such as propylene, 1-butene, 4-methyl-1-pentene, 1-pentene, 1-hexene, 1-octene and mixtures thereof, without the use of halogenated hydrocarbon as activators in said polymerization being required.

The activity of the catalysts prepared from the catalyst components of the invention can be increased by introducing a halogenated hydrocarbon as activator during the polymerization stage, bearing in mind however that this leads to the above described drawbacks.

The catalysts object of the invention are employed in the (co)polymerization of olefins CH₂=CHR according to known methods: in the gas phase or in the liquid phase (in solvent or liquid monomer).

Examples of useful solvents are: propane, butane, hexane, heptane and cyclohexane. The operating temperature can be comprised between 0°C and 200°C, in particular between 50°C and 90°C, and the operating pressure can be equal to the atmospheric pressure or greater.

Catalysts obtained from VX⁷ containing minimal amounts of OR groups are especially suited for preparing HDPE having a broad molecular weight distribution. Catalysts obtained from VX₃ containing OR groups are especially suited for preparing LLDPE having a narrow molecular weight distribution.

The catalysts of the invention can be advantageously employed for preparing saturated elastomeric copolymers of ethylene and a-olefins CH₂=CHR, where R is an alkyl radical having 1-8 carbon atoms, and unsaturated elastomeric copolymers of ethylene with said olefins CH₂=CHR and minor amounts of a diene.

The following examples are provided for illustrative and not limitative purposes.

The polymers obtained have been characterized according to the ASTM D1238-85 method, using the following parameters:
- Melt Index at 190°C using a weight of 2.16 Kg (MI_{2.16})
- Melt Index at 190°C using a weight of 21.6 Kg (MI_{21.6})
- Ratio MI_{21.6}/MI_{2.16} (MIR)

### EXAMPLE 1

### Synthesis of the VCl₃·4i-propOH Complex

75 ml of i-propOH and subsequently 8.85 g of VCl₃ are introduced, under an inert atmosphere, into a 250 ml 3-necked round bottom flask equipped with a mechanical stirrer and a reflux condenser. The mixture is heated under reflux for about 2 hours until VCl₃ is completely transformed into the complex; the complex, green in color, immediately precipitates, being hardly soluble in the alcohol, so that the reaction is assumed to be completed when the solid compound present changes its color from violet to green. Upon completion of the reaction, the reaction mixture is allowed to cool to room temperature and then filtered, and the solid product recovered is washed with n-heptane and vacuum dried at room temperature for two hours.

Elemental analysis (% by weight): V = 12.6%, Cl = 26.3%.

### Preparation of the Activated Catalyst component

1 l of anhydrous n-heptane, 30.8 ml of a 0.85 M AlEt₃ solution in hexane and 4.2 ml of CHCl₃ are introduced, under an inert atmosphere, into 2 l a 4-necked round bottom flask equipped with a mechanical stirrer, a thermometer and a nitrogen tap. The solution is cooled to 0°C and then, while stirring, 2.6 g of VCl₃·4i-propOH complex are added over a period of 15 minutes, while maintaining the temperature between 0°C and 10°C. At completion of these additions, the mixture is heated to 50°C and the reaction is allowed to proceed for 3 hours at this temperature. At the end the reaction mixture is filtered and the solid product recovered is repeatedly washed in n-heptane at 50°C and vacuum dried for 3 hours.

Elemental analysis: V = 21%, Cl = 38%.

### Polymerization of ethylene

### - Method A

700 ml of anhydrous n-heptane containing 1.6 mmoles of AliBu₃ and 16 mg of solid catalyst component in suspension are introduced, at 70°C and under a vacuum, into a 2 l stainless steel autoclave equipped with a stirrer. Thereafter 2 bar of hydrogen and subsequently ethylene up to a total pressure of 12 bar are introduced; stirring is initiated and the polymerization is carried out at 70°C for 4 hours, while ethylene feeding continues in order to maintain a constant total pressure. At the end the unreacted ethylene is removed and the obtained polymer is recovered by filtration and oven dried to constant weight at 70°C under a nitrogen flow. Obtained yields and polymer characteristics are reported in Table 1.

### - Method B:

The procedure is as described in method A, except that 700 ml of anhydrous n-heptane containing 1.6 mmoles of AliBu₃, 3.2 mmoles of CHCl₃ and 3 mg of solid catalyst component in suspension are introduced into the autoclave; obtained yields and polymer characteristics are reported in Table 1.

### EXAMPLE 2

Utilizing 5.5 g of the VCl₃·4i-propOH complex, the preparation of the activated catalyst component is carried out with the same procedure described in Example 1, except that 500 ml of n-heptane containing 55.8 mmoles of AliBu₃ and 111.6 mmoles of CHCl₃ are used and the reaction is allowed to proceed for 1 hour at 50°C: the solid catalyst component contains 21.7% by weight of V and 39.2% by weight of Cl. Ethylene is polymerized according to both method A and method B; obtained yields and polymer characteristics are reported in Table 1.

### EXAMPLE 3

Utilizing 20.4 g of the VCl₃·4i-propOH complex the preparation of the activated catalyst component is carried out with the same procedure described in Example 1, except that 440 ml of n-heptane containing 205 mmoles of AliEt₃ and 410 mmoles of CHCl₃ are used and the reaction is allowed to proceed for 3 hours at 50°C: the solid catalyst component contains 21.3% by weight of V and 42.4 by weight of Cl.

Ethylene is polymerized according to both method A and method B; obtained yields and polymer characteristics are reported in Table 1.

### EXAMPLE 4

15 g of the VCl₃·4i-propOH complex are suspended in 200 ml of n-heptane containing 300 mmoles of CHCl₃ and, cooling to temperatures comprised between 0 and 10°C, 177 ml of a 0.85 M AlEt₃ solution in hexane are added dropwise over 15 minutes; then the reaction mixture is heated to 50°C and the reaction is allowed to proceed for 3 hours. The mixture is then filterd and the solid product recovered is repeatedly washed in n-heptane at 50°C and vacuum dried for 3 hours. The solid catalyst component contains 21% by weight of V and 40.4% by weight of Cl.

Ethylene is polymerized according to both method A and method B; obtained yields and polymer characteristics are reported in Table 1.

### EXAMPLE 5

### Synthesis of the VCl₃·3THF Complex

400 ml of THF and subsequently 3 g of VCl₃ are introduced, under an inert atmosphere, into a 1 l 3-necked round bottom flask equipped with a mechanical stirrer and a reflux condenser. The mixture is heated under reflux for about 3 hours until VCl₃ is completely dissolved and then the excess of THF is distilled to obtain a flowable solid product having the following composition by weight: V = 13.5%, Cl = 28.3%

### Preparation of the Activated Catalyst Component

The procedure is as described in Example 1, except that 500 ml of n-heptane containing 60 mmoles of AlEt₃ and 120 mmoles of CHCl₃ are utilized, 7.4 g of VCl₃·3THF are added and the reaction is allowed to proceed for 3 hours at 50°C. The solid catalyst component contains 23.3% by weight of V and 44.6% by weight of Cl.

Ethylene is polymerized according to both method A and method B; obtained yields are reported in Table 1.

### EXAMPLE 6

### Copolymerization of Ethylene

Under a vacuum and at room temperature, 500 g of liquid propylene are introduced into a 2 l autoclave equipped with an anchor stirrer and purged three times with vacuum-nitrogen, then the mixture is heated to 50°C and a 12 bar overpressure of ethylene is introduced. Stirring is initiated and, using an argon overpressure, 20 ml of anhydrous n-heptane containing 4 mmoles of AliBu₃ and 4.5 mg of the solid catalyst component in suspension prepared in Example 3 are introduced. Polymerization proceeds for 4 hours at 50°C while ethylene feeding continues in order to maintain a constant total pressure. At the end the unreacted gases are removed and the polymer is dried to constant weight.

130 g of product are obtained, with a yield of 42,200 g of copolymer/g of catalyst. The copolymer contains 42% by weight of propylene and exhibits a degree of crystallinity from polyethylene of 1 % by weight, as determined by X-ray analysis.

### COMPARATIVE EXAMPLE 1

The procedure is as in Example 1, except that the preparation of the catalyst component is carried out without CHCl₃ being present; the solid catalyst component contains 20.9% by weight of V and 28.9% by weight of Cl.

Ethylene is polymerized according to both method A and method B; obtained yields and polymer characteristics are reported in Table 1.

### COMPARATIVE EXAMPLE 2

The procedure is as described in Example 1, except that the preparation of the catalyst component is carried out without CHCl₃ being present and AlEt₃ is replaced by equal molar amounts of AlEt₂Cl; the solid catalyst component contains 21.6% by weight of V and 39.8% by weight of Cl.

Ethylene is polymerized according to both method A and method B; obtained yields and polymer characteristics are reported in Table 1.

### COMPARATIVE EXAMPLE 3

The procedure is as in Example 1, the preparation of the catalyst component being carried out in the presence of CHCl₃, except that AlEt₃ is replaced by equal molar amounts of AlEt₂Cl; the catalyst component contains 25.6% by weight of V and 49.3% by weight of Cl.

Ethylene is polymerized according to both method A and method B; obtained yields and polymer characteristics are reported in Table 1.

**TABELLA 1**

| Polymerization Results and Characterization of the Obtained Polymers | | | | | |
|---|---|---|---|---|---|
| Example | Polymerization Method | Yield g_{PE}/g_{Cat} | M.I._{2,16} g/10 min | M.I._{21,6} g/10 min | M.I.R. |
| 1 | A | 19400 | 0,33 | 26,2 | 79 |
| | B | 91000 | 0,55 | 42,9 | 78 |
| 2 | A | 24700 | 0,67 | 51,6 | 77 |
| | B | 61500 | 0,23 | 19,3 | 84 |
| 3 | A | 22000 | 0,85 | 62,0 | 73 |
| | B | 70700 | 0,70 | 51,6 | 74 |
| 4 | A | 22600 | 0,43 | 35,7 | 83 |
| | B | 63800 | 0,52 | 40,6 | 78 |
| 5 | A | 21300 | 0,38 | 30,8 | 81 |
| | B | 60400 | 0,70 | 35,0 | 78 |
| 1 (Comparative) | A | 2200 | 0,38 | 29,1 | 77 |
| | B | 75000 | 0,70 | 49,7 | 71 |
| 2 (Comparative) | A | 14700 | 0,19 | 24,7 | 130 |
| | B | 49200 | 0,10 | 12,9 | 129 |
| 3 (Comparative) | A | 8000 | 0,15 | 16,3 | 109 |
| | B | 30000 | 0,10 | 11,5 | 115 |

## Claims

1. Components of catalysts for the polymerization of olefins, characterized by comprising the product of the reaction between:
(a) a complex between a halogenated vanadium compound and an electron-donor compound having general formula:
VX₃·nED
wherein:
X = halogen;
ED = electron-donor compound; and
0.5≤n≤6;
(b) a non-halogenated, reducing compound, capable of reacting with the electron-donor compound present in the complex; and
(c) a halogenated compound selected from the group consisting of: saturated or unsaturated, aromatic or aliphatic, halogenated hydrocarbons and esters of a halogenated unsaturated aliphatic acid.

2. Components of catalysts according to claim 1, characterized in that the electron-donor compound is selected from the group consisting of: alcohols, silanols, ethers, amines, ketones, esters of carboxylic acids and phosphines.

3. Components of catalysts according to claim 1, characterized in that the halogenated vanadium compound is VCl₃.

4. Components of catalysts according to claim 1, characterized in that the electron-donor compound is selected from the group consisting of: aliphatic or cycloaliphatic alcohols having from 1 to 12 carbon atoms; silanols having formula R₄₋ₙSi(OH)ₙ, where the radicals R, equal or different, are hydrocarbon radicals having from 1 to 12 carbon atoms and n = 1 or 2; and alkyl or cycloalkyl ethers having from 2 to 20 carbon atoms.

5. Component of catalyst according to claim 1, characterized in that the complex (a) is selected from the group consisting of: VCl₃nEtOH, VCl₃nTHF, and VCl₃4i-propOH where n is comprised between 2 and 4.

6. Components of catalysts according to claim 1, characterized in that the compound (b) is an aluminum derivative having formula AlR₂Y, where Y= R, H, OR, or AlOR₂ and the radicals R are equal or different, hydrocarbon radicals.

7. Components of catalysts according to claim 6, characterized in that the aluminum derivative is selected from the group consisting of: AlEt₃, AliBu₃, AlBu₃, Al(OEt)Et₂, AIEt₂H, AlIBU₂H, Et₂Al-O-AlEt₂ and iBuAl-O-AliBu₂.

8. Components of catalysts according to claim 1, characterized in that the compound (c) is a halogenated saturated aliphatic hydrocarbon.

9. Components of catalysts according to claim 8, characterized in that the halogenated saturated aliphatic hydrocarbon is CHCl₃.

10. Catalysts for the (co)polymerization of olefins, characterized by comprising the product of the reaction between a component of catalysts according to claim 1 and an alkyl aluminum compound.

11. Catalysts for the (co)polymerization of olefins according to claim 10, characterized in that the alkyl aluminum compound is an Al-trialkyl.

12. Catalysts according to claim 11, characterized in that the Al-trialkyl is selected from the group consisting of: AlEt₃, AlBu₃ and AliBu₃.

13. Process for the (co)polymerization of ethylene and α-olefins, characterized in that the (co)polymerization is conducted in the presence of the catalysts according to any of claims 10, 11 or 12.

14. Process for the polymerization of ethylene alone or in mixture with other olefins CH₂=CHR, where R is an alkyl radical having 1-8 carbon atoms, characterized in that the polymerization is conducted in the presence of the catalysts according to any of claims 10, 11 or 12.

15. Process according to claim 14, characterized in that the olefins CH₂=CHR are selected from the group consisting of: propylene, 1-butene, 1-pentene, 4-methyl-1-pentene, 1-hexene and 1-octene.

16. Process for the copolymerization of olefins CH₂=CHR according to any of the claims 13, 14 or 15, characterized in that the (co)polymerization is conducted in the presence of a halogenated compound.

## Patentansprüche

1. Katalysatorkomponenten für die Polymerisation von Olefinen, dadurch gekennzeichnet, daß sie das Reaktionsprodukt zwischen:
(a) einem Komplex zwischen einer halogenierten Vanadiumverbindung und einer Elektronendonorverbindung mit der allgemeinen Formel:
VX₃·nED
worin:
X = Halogen;
ED = Elektronendonorverbindung; und
0,5≤n≤6;
(b) einer nichthalogenierten, reduzierenden Verbindung, befähigt zur Umsetzung mit der in dem Komplex vorliegenden Elektronendonorverbindung; und
(c) einer halogenierten Verbindung, ausgewählt aus der Gruppe, bestehend aus: gesättigten oder ungesättigten, aromatischen oder aliphatischen, halogenierten Kohlenwasserstoffen und Estern einer halogenierten ungesättigten aliphatischen Säure, umfassen.

2. Katalysatorkomponenten nach Anspruch 1, dadurch gekennzeichnet, daß die Elektronendonorverbindung ausgewählt ist aus der Gruppe, bestehend aus: Alkoholen, Silanolen, Ethern, Aminen, Ketonen, Estern von Carbonsäuren und Phosphinen.

3. Katalysatorkomponenten nach Anspruch 1, dadurch gekennzeichnet, daß die halogenierte Vanadiumverbindung VCl₃ ist.

4. Katalysatorkomponenten nach Anspruch 1, dadurch gekennzeichnet, daß die Elektronendonorverbindung ausgewählt ist aus der Gruppe, bestehend aus: aliphatischen oder cycloaliphatischen Alkoholen mit 1 bis 12 Kohlenstoffatomen; Silanolen der Formel R₄₋ₙSi(OH)ₙ, worin die Reste R, gleich oder verschieden, Kohlenwasserstoffreste mit 1 bis 12 Kohlenstoffatomen darstellen und n = 1 oder 2 ist; und Alkyl- oder Cycloalkylethern mit 2 bis 20 Kohlenstoffatomen.

5. Katalysatorkomponenten nach Anspruch 1, dadurch gekennzeichnet, daß der Komplex (a) ausgewählt ist aus der Gruppe, bestehend aus: VCl₃nEtOH, VCl₃nTHF und VCl₃4i-PropOH, worin n zwischen 2 und 4 umfaßt wird.

6. Katalysatorkomponenten nach Anspruch 1, dadurch gekennzeichnet, daß die Verbindung (b) ein Aluminiumderivat der Formel AlR₂Y darstellt, worin Y = R, H, OR oder AlOR₂ und die Reste R gleiche oder verschiedene Kohlenwasserstoffreste sind.

7. Katalysatorkomponenten nach Anspruch 6, dadurch gekennzeichnet, daß das Aluminiumderivat ausgewählt ist aus der Gruppe, bestehend aus: AlEt₃, AliBu₃, AlBu₃, Al(OEt)Et₂, AlEt₂H, AliBu₂H, Et₂Al-O-AlEt₂ und iBu₂Al-O-AliBu₂.

8. Katalysatorkomponenten nach Anspruch 1, dadurch gekennzeichnet, daß die Verbindung (c) ein halogenierter gesättigter aliphatischer Kohlenwasserstoff ist.

9. Katalysatorkomponenten nach Anspruch 8, dadurch gekennzeichnet, daß der halogenierte gesättigte aliphatische Kohlenwasserstoff CHCl₃ ist.

10. Katalysatoren zur (Co)polymerisation von Olefinen, dadurch gekennzeichnet, daß sie das Reaktionsprodukt zwischen einer Katalysatorkomponente nach Anspruch 1 und einer Alkylaluminiumverbindung umfassen.

11. Katalysatoren zur (Co)polymerisation von Olefinen nach Anspruch 10, dadurch gekennzeichnet, daß die Alkylaluminiumverbindung Al-Trialkyl ist.

12. Katalysatoren nach Anspruch 11, dadurch gekennzeichnet, daß das Al-Trialkyl ausgewählt ist aus der Gruppe, bestehend aus: AlEt₃, AlBu₃ und AliBu₃.

13. Verfahren zur (Co)polymerisation von Ethylen und α-Olefinen, dadurch gekennzeichnet, daß die (Co)polymerisation in Gegenwart der Katalysatoren nach einem der Ansprüche 10, 11 oder 12 durchgeführt wird.

14. Verfahren zur Polymerisation von Ethylen allein oder im Gemisch mit anderen Olefinen CH₂=CHR, worin R einen Alkylrest mit 1-8 Kohlenstoffatomen darstellt, dadurch gekennzeichnet, daß die Polymerisation in Gegenwart der Katalysatoren nach einem der Ansprüche 10, 11 oder 12 durchgeführt wird.

15. Verfahren nach Anspruch 14, dadurch gekennzeichnet, daß die Olefine CH₂=CHR ausgewählt sind aus der Gruppe, bestehend aus: Propylen, 1-Buten, 1-Penten, 4-Methyl-1-penten, 1-Hexen und 1-Octen.

16. Verfahren zur (Co)polymerisation von Olefinen CH₂=CHR nach einem der Ansprüche 13, 14 oder 15, dadurch gekennzeichnet, daß die (Co)polymerisation in Gegenwart einer halogenierten Verbindung durchgeführt wird.

## Revendications

1. Composants de catalyseurs pour la polymérisation d'oléfines, caractérisés en ce qu'ils comprennent le produit de la réaction entre :
(a) un complexe entre un dérivé de vanadium halogéné et un dérivé électrodonneur répondant à la formule générale:
VX₃,nED
dans laquelle:
X est un halogène;
ED est un dérivé électrodonneur; et
0,5 ≤n≤6;
(b) un dérivé réducteur, non halogéné, capable de réagir avec le dérivé électrodonneur présent dans le complexe; et
(c) un dérivé halogéné choisi dans le groupe consistant en: hydrocarbures halogénés saturés ou insaturés, aromatiques ou aliphatiques, et esters d'un acide aliphatique insaturé halogéné.

2. Composants de catalyseurs selon la revendication 1, caractérisés en ce que le dérivé électrodonneur est choisi dans le groupe consistant en: alcools, silanols, éthers, amines, cétones, esters d'acides carboxyliques et phosphines.

3. Composants de catalyseurs selon la revendication 1, caractérisés en ce que le dérivé de vanadium halogéné est VCl₃.

4. Composants de catalyseurs selon la revendication 1, caractérisés en ce que le dérivé électrodonneur est choisi dans le groupe consistant en: alcools aliphatiques ou cycloaliphatiques comportant 1 à 12 atomes de carbone ; silanol répondant à la formule R₄₋ₙSi(OH)ₙ, dans laquelle les radicaux R, identiques ou différents, sont des radicaux hydrocarbonés comportant un à deux atomes de carbone et n est égal à 1 ou 2 ; et des éthers alkyliques ou cycloalkyliques comportant 2 à 20 atomes de carbone.

5. Composants de catalyseurs selon la revendication 1, caractérisés en ce que le complexe (a) est choisi dans le groupe consistant en: VCl₃nEtOH, VCl₃nTHF et VCl₃4(i-propH), où n est compris entre 2 et 4.

6. Composants de catalyseurs selon la revendication 1, caractérisés en ce que le composé (b) est un dérivé de l'aluminium répondant à la formule AlR₂Y, dans laquelle Y est égal à R, H, OR ou AlOR₂ et les radicaux R, identiques ou différents, sont des radicaux hydrocarbonés.

7. Composants de catalyseurs selon la revendication 6, caractérisés en ce que le dérivé d'aluminium est choisi dans le groupe consistant en: AlEt₃, AliBu₃, AlBu₃, Al(OEt)Et₂, AlEt₂H, AliBu₂H, Et₂Al-O-AlEt₂ et iBuAl-O-AliBu₂.

8. Composants de catalyseurs selon la revendication 1, caractérisés en ce que le composé (c) est un hydrocarbure aliphatique saturé halogéné.

9. Composants de catalyseurs selon la revendication 8, caractérisés en ce que l'hydrocarbure aliphatique saturé halogéné est CHCl₃.

10. Catalyseurs pour la co(polymérisation) d'oléfines, caractérisés en ce qu'ils comprennent le produit de la réaction entre un composant de catalyseur selon la revendication 1 et un dérivé alkylaluminium.

11. Catalyseurs pour la co(polymérisation) d'oléfines selon la revendication 10, caractérisés en ce que le dérivé alkylaluminium est un trialkylaluminium.

12. Catalyseurs selon la revendication 11, caractérisés en ce que le dérivé trialkyl-Al est choisi dans le groupe consistant en: AlEt₃, AlBu₃ et AliBu₃.

13. Procédé de co(polymérisation) de l'éthylène et d'α-oléfines, caractérisé en ce que l'on effectue la co(polymérisation) en présence de catalyseurs selon l'une quelconque des revendications 10, 11 ou 12.

14. Procédé de polymérisation de l'éthylène, seul ou en mélange avec d'autres oléfines CH₂=CHR, où R est un radical alkyle comportant 1 à 8 atomes de carbone, caractérisé en ce que l'on effectue la polymérisation en présence des catalyseurs selon l'une quelconque des revendications 10, 11 ou 12.

15. Procédé selon la revendication 14, caractérisé en ce que les oléfines CH₂=CHR sont choisies dans le groupe consistant en: propylène, 1-butène, 1-pentène, 4-méthyl-1-pentène, 1-hexène et 1-octène.

16. Procédé de co(polymérisation) d'oléfines CH₂=CHR selon l'une quelconque des revendications 13, 14 ou 15, caractérisé en ce que la co(polymérisation) est effectuée en présence d'un dérivé halogéné.
